# EUROPEAN PATENT APPLICATION

(11) **EP 1 714 819 A1**
(43) Date of publication of application: **25.10.2006**
(21) Application number: 05404003.5
(22) Date of filing: 25.07.2005
(51) Int. Cl.: B60K 15/077

(54) **Fuel tank system with two adjacently disposed tanks**

(30) Priority: 20.04.2005 TR 200501431
(71) Applicant: Uzel Makina Sanayi Anonim Sirketi, Istanbul (TR)
(72) Inventor: Bayram, Timuçin, Istanbul (TR)
(74) Representative: Berkkam, Ayfer

(57) **Abstract**

Present invention is fuel tank system with two adjacently disposed tanks that ensures that a tractor can be operated with minimum fuel on inclined surfaces and the float (11) is not effected by any fuel irregularities, the system being comprised of a closed air discharge system (fuel hoses) (1), a supplementary air discharging T-piece complex (1.a), an air discharge nipple (1.b), an air discharge bend (1.c), a right-hand fuel tank (2) with a volume of 90 liters that ensures storage of fuel, a left-hand fuel tank (3) with a volume of 60 liters that ensures storage of fuel, a connection pipe (4) connecting said tanks, a plastic pipe (5) located particularly to prevent the fuel in the left fuel tank from flowing into the other tank, fittings on right-hand fuel tank (6), fittings on left-hand fuel tank (7), a fuel loading neck through which fuel is loaded (8), a fuel suction compartment (9), a fuel circulation compartment (10), a return pipe that ensures passage of fuel from one side to other (10.a), a float complex that ensures suction of fuel and display of fuel quantity (11), a discharge plug functioning as a lid to ensure discharge of fuel (12), a cover complex that is closed after fuel is loaded, and located on top of fuel loading section (13) and a filter that removes any debris from fuel (14).

## Description

Present invention relates to an adjacently disposed fuel tank system with double tanks that ensures that a tractor is operated with a minimum fuel under land conditions and the float (11) is not effected by any fuel irregularities, the system being comprised of a closed air discharge system (fuel hoses) (1), a supplementary air discharging T-piece complex (1.a), an air discharge nipple (1.b), an air discharge bend (1.c), a right-hand fuel tank (2) with a volume of 90 liters that ensures storage of fuel, a left-hand fuel tank (3) with a volume of 60 liters that ensures storage of fuel, a connection pipe (4) for both tanks, a plastic pipe (5) located particularly to operate on inclined lands that prevents the fuel in the left fuel tank from flowing into the other tank, fittings on right-hand fuel tank (6), fittings on left-hand fuel tank (7), a fuel loading neck through which fuel is loaded (8), a fuel suction compartment (9), a fuel circulation compartment (10), a return pipe that ensures passage of fuel from one side to other (10.a), a float complex that ensures suction of fuel and display of fuel quantity (11), a discharge plug functioning as a lid to ensure discharge of fuel (12), a cover complex that is closed after fuel is loaded, and located on top of fuel loading section (13) and a filter that removes any debris from fuel (14).

In the prior art fuel tanks disposed adjacently (at the same level) with double tanks, the fuel quantity changes at the point of fuel suction under land conditions (on inclined surfaces), the fuel level in the tank falls below 50-60 liters, and this causes the tractor to stop. This also results in an irregularity in the signals given by the float (11) disposed in the fuel tank.

The cause of these problems is that the fuel in the left-had tank (3) naturally flows into the right-hand tank (2) while driving on the inclined surfaces. In order to prevent this, i.e. the flow of fuel from left-hind tank (3) into the right-had tank (2), the connection between two tanks is changed and the left-had tank (3) is provided with a plastic pipe (5) which is specifically disposed.

The plastic pipe is so disposed in the tank that any fuel less than 45 liters can not pass to the other side when it is angled at 25 degrees forwards, backwards, right-wise, left-wise and at double angles.

Thereby, the flow of fuel from left-hand tank (3) to the right-hand tank (2) is prevented and the problem of stopping while having 50-60 liters of fuel in the fuel tank while driving on inclined surfaces is eliminated. Therefore, a more marginal driving period is created for the operator. (The critical volume under which the tractor will stop is determined as 5 liters for the flat surfaces and 15 liters for the inclined surfaces. This is at around 50-60 liters in the equivalents thereof.)

In the present invention, the right-hand (2) and left-hand (3) fuel tanks are mounted on the tractor body at the fittings for right-hand and left-hand fuel tanks (6-7) with a number of brackets and belts. The fuel tanks are connected to each other via a connection pipe (4) that ensures flow of fuel between two fuel tanks.

The hose connecting two tanks (4) is attached to the fuel tanks with a clip. Fuel is loaded at the right-hand tank (2). First, the left-hand tank (3) then the right-hand tank (2) is filled with fuel.

In order to discharge any air accumulated in the fuel tank during fuel loading, a closed type air discharge system (1) is established. The points where air may occur in fuel tank are determined and the air is discharged with hoses through the fuel loading neck (8). Fuel system (fuel suction and return) is performed over the left-hand tank (3).

Before the system, the fuel in the tanks may easily dislocate due to on-land working conditions and as a result of some shakings in the left-(3) and right-hand fuel tanks (2) since the fuel tanks are at the same level. (The fuel in the left-hand fuel tank fills into the right-hand fuel tank). The fuel quantity at the fuel suction (9) point changes under land conditions and this causes the tractor to stop. This also results in irregularities in the signals given by the float (11) located in the fuel tank.

In order to prevent these problems, the fuel located in the left-hand fuel tank (3) is kept under control. The left-hand fuel tank (3) is provided with a plastic pipe (5) that is specially disposed in order to keep necessary amount of fuel in the left-hand fuel tank (3). The plastic pipe (5) prevents the fuel in the left-hand fuel tank (3) from flowing into the right-hand fuel tank (2) and thus prevents the float (11) from giving irregular signals.

The fuel tank system described herein ensures that the tractors operate at minimum fuel quantities under land conditions and the operators have a more marginal duration of operation, and prevents the float (11) from being effected by any fuel irregularities.

### Advantages:

This fuel system is formed to ensure that the tractors having double fuel tanks disposed adjacently, i.e. right- (2) and left-hand fuel tank (3), is driven with an optimized amount of fuel under even hardest inclination conditions (forward and right-wise located at 25°).

The basic advantage of this fuel system is that it is possible to drive the vehicle under the toughest inclination conditions with 15 liters of fuel. This quantity is at around 50 - 60 liters in equivalent systems, that obliges operators to re-fuel when this quantity is available in the fuel tank.

With this system, the operators are given the advantage of driving about 3 hours more without re-fueling.

Another advantage of this system is that the usable fuel volumes that are obtained with larger fuel tank volumes, are also attained with lower fuel tank volumes.

### DESCRIPTION OF FIGURES:

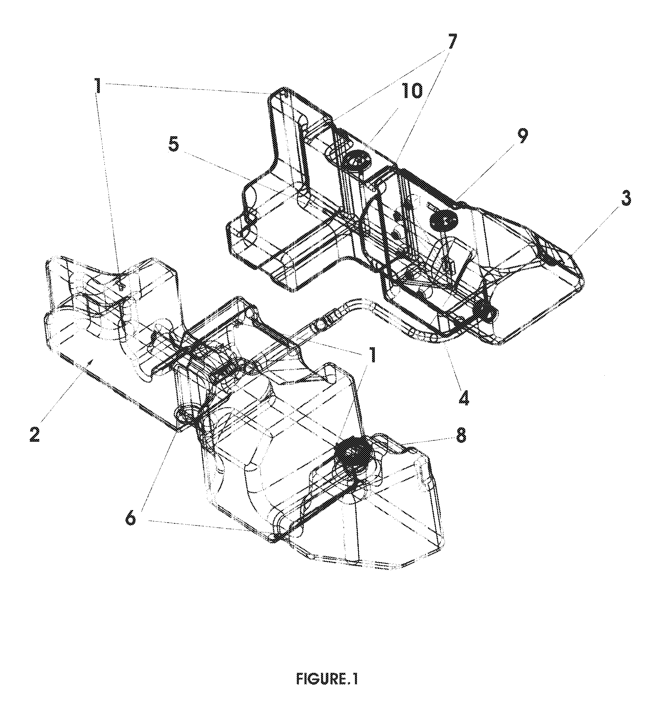

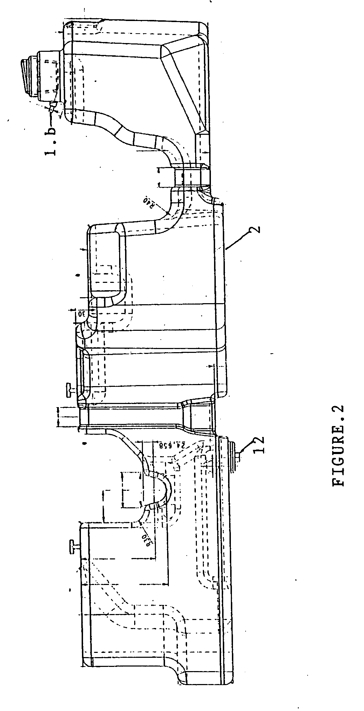

### Figure 1: Principle of operation at the left- and right-hand fuel tanks

**(1)** Closed air discharge system (fuel hoses)
**(2)** Right-hand fuel tank
**(3)** Left-hand fuel tank
**(4)** Connection pipe between two tanks
**(5)** Plastic pipe in the left-hand fuel tank
**(6)** Fittings for right-hand fuel tank
**(7)** Fittings for left-hand fuel tank
**(8)** Fuel loading neck
**(9)** Fuel suction compartment
**(10)** Fuel return compartment

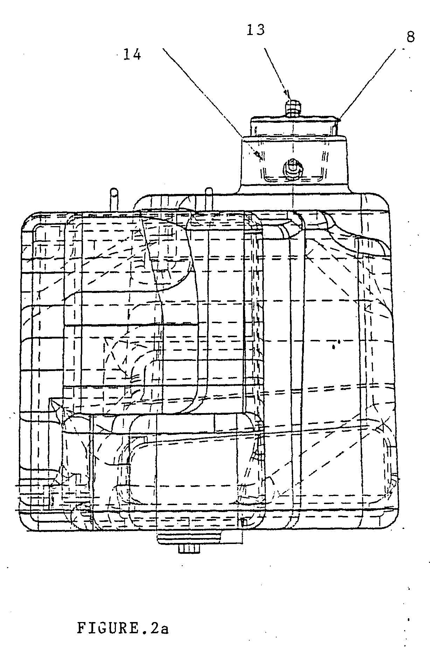

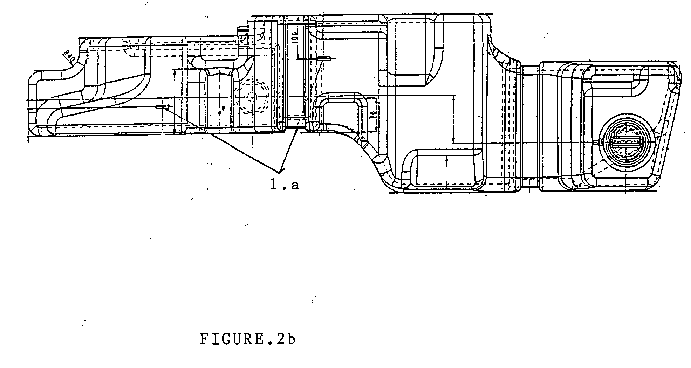

### Figure 2: A view of fuel complex at right-hand fuel tank

(2) Body of right-hand tank
(12) Discharging plug
(1.b) Air discharging nipple

### Figure (2.a): A view of fuel complex at right-hand fuel tank

(8) Fuel loading neck
(13) Cover complex
(14) Filter

### Figure (2.b) : A view of fuel complex at right-hand fuel tank (1.a) air discharge T-piece complex

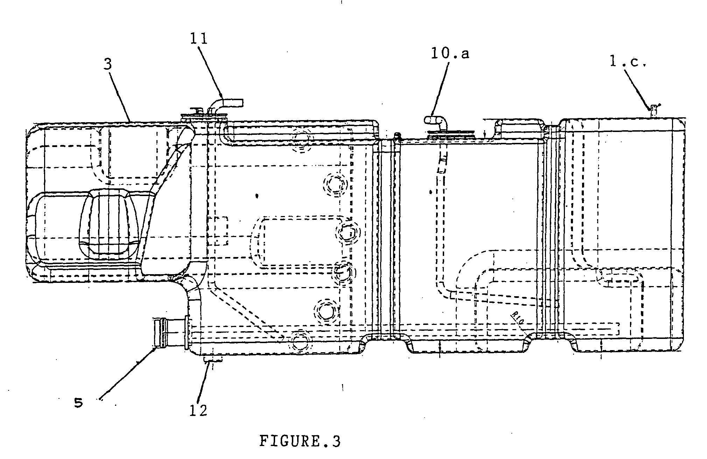

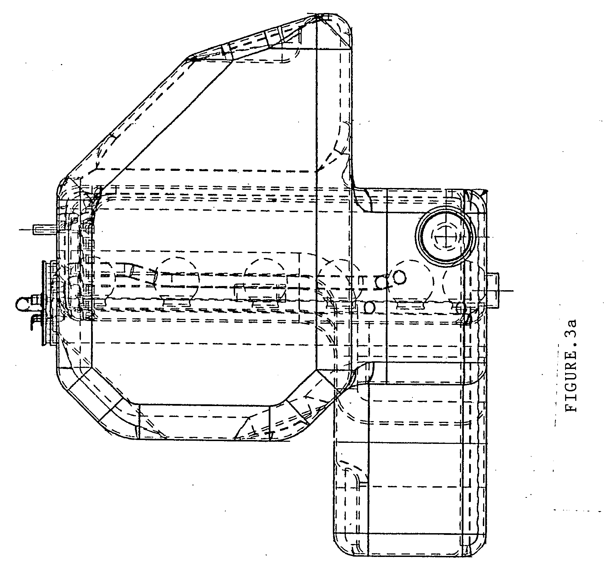

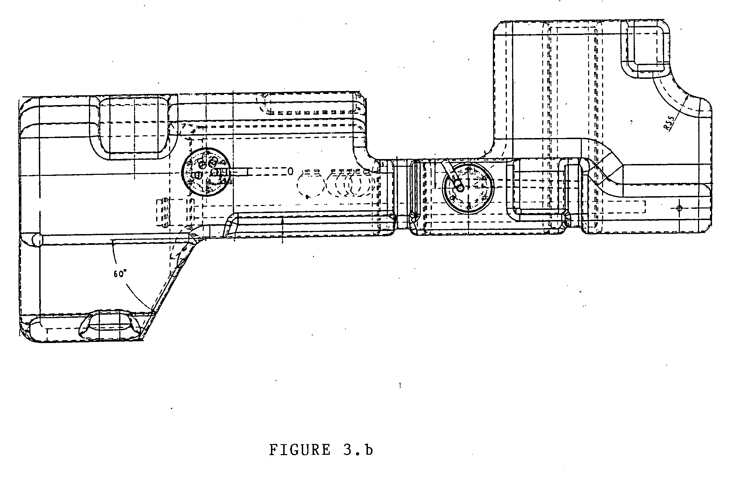

### Figure 3: A view of fuel complex at left-hand fuel tank

(3) Body of left-hand tank
(11) Body of float
(10.a) Return pipe
(1.c) Air discharge bend
(5) Tank hose complex
(12) Discharging plug

### Figure (3.a): Left-hand tank complex element

### Figure (3.b): Left-hand tank complex element

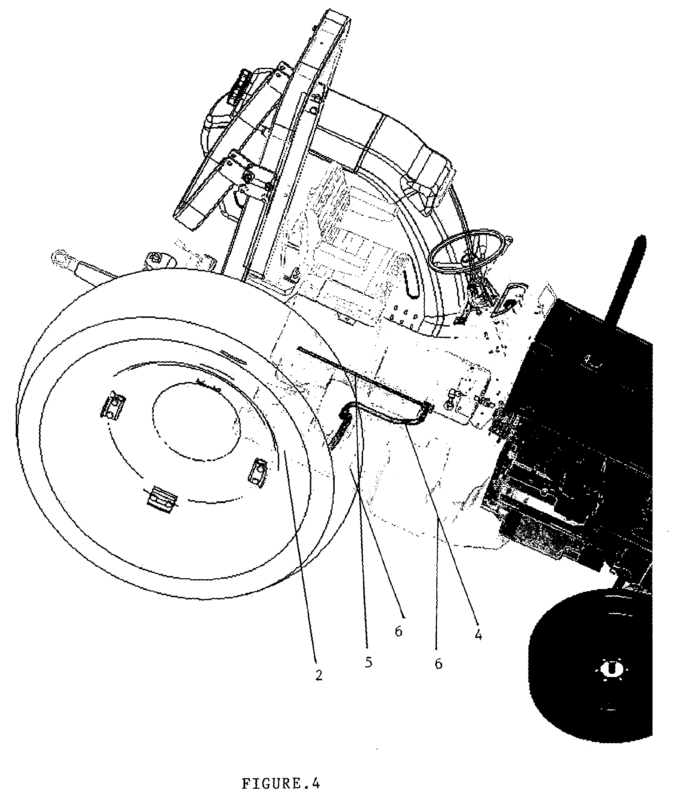

### Figure 4: Position of fuel tank on tractor

**(2)** Right-hand fuel tank
**(3)** Left-hand fuel tank
**(4)** Connection pipe between two tanks
**(5)** Plastic pipe in left-hand fuel tank
**(6)** Fittings for right-hand tank

## Claims

1. An adjacently disposed fuel tank system with double tanks that ensures that a tractor is operated with minimum fuel under land conditions and the float (11) is not effected by any fuel irregularities, the system being comprised of a closed air discharge system (fuel hoses) (1), a supplementary air discharging T-piece complex (1.a), an air discharge nipple (1.b), an air discharge bend (1.c), a right-hand fuel tank (2) with a volume of 90 liters that ensures storage of fuel, a left-hand fuel tank (3) with a volume of 60 liters that ensures storage of fuel, a connection pipe (4) for both tanks, a plastic pipe (5) located particularly to prevent the fuel in the left fuel tank from flowing into the other tank, fittings on right-hand fuel tank (6), fittings on left-hand fuel tank (7), a fuel loading neck through which fuel is loaded (8), a fuel suction compartment (9), a fuel circulation compartment (10), a return pipe that ensures passage of fuel from one side to other (10.a), a float complex that ensures suction of fuel and display of fuel quantity (11), a discharge plug functioning as a lid to ensure discharge of fuel (12), a cover complex that is closed after fuel is loaded, and located on top of fuel loading section (13) and a filter that removes any debris from fuel (14).

2. An adjacently disposed fuel tank system with double tanks according to claim 1, wherein under land conditions, the flow of fuel from left-hand tank (3) to the right-hand tank (2) is prevented, and the problem of stopping while having 50-60 liters of fuel in the fuel tank while driving on inclined surfaces is eliminated with a plastic pipe (5) located in the left-hand tank.

3. An adjacently disposed fuel tank system with double tanks according to claim 1, wherein the right-hand (2) and left-hand (3) fuel tanks are mounted on the tractor body at the fittings for right-hand and left-hand fuel tanks (6-7) with a number of brackets and belts and the fuel tanks are connected to each other via a connection pipe (4) that ensures flow of fuel between two fuel tanks.

4. An adjacently disposed fuel tank system with double tanks according to claim 1, wherein the hose connecting two tanks (4) is attached to the fuel tanks with a clip, fuel is loaded at the right-hand tank (2) and first, the left-hand tank (3) then the right-hand tank (2) is filled with fuel.

5. An adjacently disposed fuel tank system with double tanks according to claim 1, wherein in order to discharge any air accumulated in the fuel tank during fuel loading, a closed type air discharge system (1) is established, the points where air may occur in fuel tank are determined and the air is discharged with hoses through the fuel loading neck (8).

6. An adjacently disposed fuel tank system with double tanks according to claim 1, wherein in order to eliminate the problems of stopping and irregularities in the signals given by the float (11) in the fuel tank as a result of the fuel quantity changing at the fuel suction (9) point, the fuel in the left-hand fuel tank (3) is prevented from flowing into the right-hand fuel tank (2) by the plastic pipe disposed in the left-hand fuel tank (3) and thus the float (11) is prevented from giving irregular signals.

7. A fuel tank system according to claim 1 wherein fuel-resistant plastic pipes are used which are adjusted according to driving angles and located particularly in order to ensure that some fuel is still available at the fuel suction point of the fuel tank under the conditions of most angled inclination (forward and right-wise located at 25°) in order to ensure that the tractors having double fuel tanks disposed adjacently, i.e. right- (2) and left-hand fuel tank (3), is driven with an optimized amount of fuel under even hardest inclination conditions (forward and right-wise located at 25°).

8. A fuel tank system according to claim 1 wherein it is ensured that the usable fuel volumes that are obtained with larger fuel tank volumes, are also attained with lower fuel tank volumes with the use of fuel-resistant plastic pipes which are adjusted according to driving angles and located particularly so as to ensure that tractor is driven 3 hours more on average without re-fuelling under the toughest inclination conditions with 15 liters of fuel and the fuel is always available at fuel suction point of the fuel tank and prevent the fuel in the fuel tank from passing to the other fuel tank under the conditions of most angled inclination (forward and right-wise located at 25°).
